# EUROPEAN PATENT APPLICATION

(11) **EP 1 747 867 A1**
(43) Date of publication of application: **31.01.2007**
(21) Application number: 05741642.2
(22) Date of filing: 19.05.2005
(51) Int. Cl.: B28D 5/00, C03B 33/037, G02F 1/13, G02F 1/1333

(54) **MOTHERBOARD CUTTING METHOD, MOTHERBOARD SCRIBING APPARATUS, PROGRAM AND RECORDING MEDIUM**

(30) Priority: 20.05.2004 JP 2004149948
(71) Applicant: Mitsuboshi Diamond Industrial Co., Ltd., Suita-city, Osaka Pref. 564-0044 (JP)
(72) Inventor: NISHIO, Y., c/o MITSUBOSHI DIAMOND IND. CO., LTD., Suita-city, Osaka 564-0044 (JP)
(74) Representative: TBK-Patent
(86) International application number: PCT/JP2005/009197
(87) International publication number: WO 2005/113212

(57) **Abstract**

A mother substrate cutting method for cutting a plurality of unit substrates out of a mother substrate, comprises the steps of: (a) forming scribe lines on the mother substrate by scribe forming means; and (b) breaking the mother substrate along the scribe lines, wherein the step (a) includes a step of forming a first scribe line for cutting a first unit substrate out of the mother substrate and a second scribe line for cutting a second unit substrate out of the mother substrate by moving the scribe forming means with respect to the mother substrate without a pressure to the mother substrate by the scribe forming means being interrupted.

## Description

### BACKGROUND OF THE INVENTION

### 1. FIELD OF THE INVENTION:

The present invention relates to: a mother substrate cutting method for cutting a plurality of unit substrates out of a mother substrate by forming scribe lines on the mother substrate and breaking the mother substrate along the scribe lines, a program for performing the method by a computer, and a computer readable recording medium on which the program is recorded; and a mother substrate scribing device for forming scribe lines on a mother substrate.

### 2. DESCRIPTION OF THE RELATED ART

Liquid crystal display apparatuses include liquid crystal display panels. The liquid crystal display panels are manufactured by cutting a plurality of unit substrates out of a mother substrate, and bonding the unit substrates cut out of the mother substrate to each other. The liquid crystal display panels may also be manufactured by bonding two mother substrates to form a bonded substrate of the mother substrates, and then cutting the bonded substrate of a plurality of unit substrates out of the bonded substrate of the mother substrates.

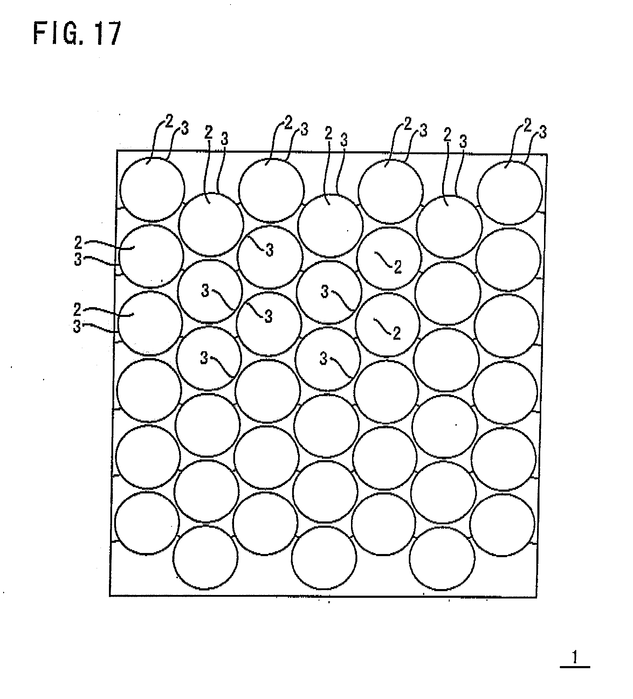

Figure 17 shows a plurality of scribe lines formed by a scribe line forming method disclosed in Japanese Laid-Open Publication No. 2002-87836.

In the scribe line forming method disclosed in Japanese Laid-Open Publication No. 2002-87836, in order to cut a plurality of circular solar cell devices 2 out of a brittle non-metal material substrate 1, a plurality of cracking outer peripheral lines (scribe lines) 3 are formed by irradiating outer peripheries of the plurality of circular solar cell devices 2 with laser beam.

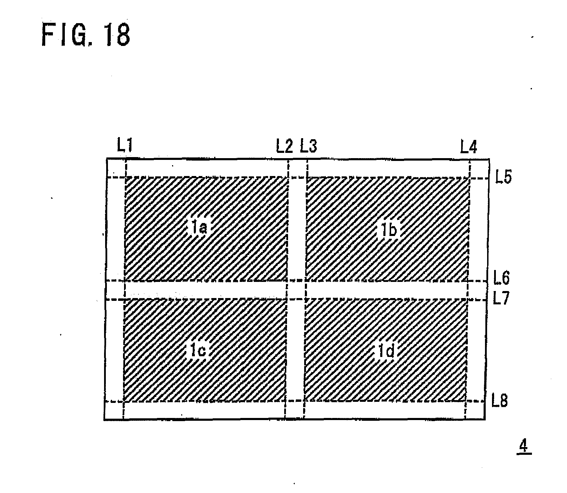

Figure 18 shows lines to be scribed formed on a first surface of a mother substrate 4.

The mother substrate 4 has a rectangular shape. On the first surface of the mother substrate 4, lines to be scribed L1 through L4 are formed in a direction along a narrow side of the rectangle (longitudinal direction in the figure). Lines to be scribed L5 through L8 are formed in a direction along a wide side of the rectangle (horizontal direction in the figure).

With reference to Figure 18, a method for forming scribe lines different from the scribe line forming method disclosed in Japanese Laid-Open Publication No. 2002-87836 will be described.

The mother substrate 4 is fixed on a table. A plurality of adsorption holes are formed on the table. Suction means sucks the mother substrate through the plurality of the adsorption holes. In this way, the mother substrate 4 is adsorbed to the table, and the mother substrate 4 is fixed on the table.

A scribing device moves along the lines to be scribed L1 through substrate scribe lines are formed sequentially on the first substrate of the mother substrate 4 (scribing step).

In the scribing step, vertical cracks are formed when the scribe lines are formed. The vertical cracks run along a thickness direction of the mother substrate 4 from the scribe lines.

A breaking device applies a bending moment on the mother substrate 4 along the scribe lines for breaking the mother substrate 4. By extending the vertical cracks so as to reach a second surface, which opposes the first surface of the mother substrate 4 on which the scribe lines are formed, the mother substrate 4 is broken along the scribe lines (breaking step).

By performing the breaking step after the scribing step, unit substrates 1a, 1b, 1c, and 1d are cut out of the mother substrate 4.

### DISCLOSURE OF THE INVENTION

### PROBLEMS TO BE SOLVED BY THE INVENTION

However, in the scribe line forming method disclosed in Japanese Laid-Open Publication No. 2002-87836, a scribing process time is long because formation of the scribe lines is suspended after a scribe line is formed around one of the circular solar cell devices 2 and before forming a scribe line around the next circular solar cell device 2 when the plurality of circular solar cell devices 2 are formed of the brittle non-metal material substrate 1.

Further, in the conventional art described with reference to Figure 18, a scribing process time is long because each time one of the scribe lines is formed, formation of the scribe lines is suspended.

Moreover, in the conventional art described with reference to Figure 18, at least one of the plurality of scribe lines intersects with one of a plurality of sides of the mother substrate at at least two points. Thus, when a force generated by an external factor (for example, a stress generated at an adsorption part by adsorbing the mother substrate to the table, or a stress generated in a bent part because the mother substrate is bent due to a roughness of a surface of the table) is applied to the mother substrate, the mother substrate tends to be divided into at least two portions. For example, a scribe line formed along a line to be scribed L1 intersects with a side of the mother substrate. The scribe line also intersects with another side. When the scribe line is being formed, a force caused by an external factor is generated and a bending moment is applied to the scribe line. Thus, the mother substrate is cut along the scribe line when the scribe line is being formed and adsorption power of the table surface with respect to the mother substrate is lowered. The mother substrate may be divided into at least two portions. As such, when a force generated by an external factor (for example, an internal stress of the mother substrate generated by a change in a holding or supporting state of the mother substrate or the like) is applied during a scribing process for the mother substrate, the mother substrate is cut and divided into at least two portions. The divided portion of the mother substrate may bump into the scribing device (scribing head) and the scribing device or the mother substrate itself may be damaged.

The present invention is made in view of such problems. The present invention is intended to provide a mother substrate cutting method for cutting a plurality of unit substrates out of a mother substrate by forming scribe lines on the mother substrate and breaking the mother substrate along the scribe lines, a program for having a computer to perform the method, a computer readable medium on which a program is recorded and a mother substrate scribing device for forming scribe lines on the mother substrate.

### MEANS IN ORDER TO SOLVE THE PROBLEMES

According to one aspect of the present invention, there is provided A mother substrate cutting method for cutting a plurality of unit substrates out of a mother substrate, comprising the steps of:(a) forming scribe lines on the mother substrate by scribe forming means; and (b) breaking the mother substrate along the scribe lines, the step (a) includes a step of forming scribe lines for cutting at least one unit substrate out of the mother substrate by moving the scribe forming means with respect to the mother substrate without a pressure to the mother substrate by the scribe forming means being interrupted.

Thus, according to the mother substrate cutting method of the present invention, a first scribe line and a second scribe line can be formed without a pressure to the mother substrate by the scribe line forming means being interrupted and a movement of scribe forming means being suspended. Thus, a scribing process time for forming the scribe lines can be reduced. Further, cracks do not reach sides of the mother substrate during the scribing process, and thus, the mother substrate is less likely to be cut by a force generated by an external factor. In this way, the scribe lines can be formed on the mother substrate. As a result, it is possible to prevent the mother substrate from being divided into two or more portions while the scribe lines are being formed.

In one embodiment of the present invention, the step (a) further can further include a step of forming scribe lines for cutting a plurality of unit substrate out of the mother substrate by moving the scribe forming means with respect to the mother substrate without a pressure to the mother substrate by the scribe forming means being interrupted; and n is an integer equal to or larger than 3.

Thus, the mother substrate cutting method of the present invention, n-th unit substrate can be cut out of the mother substrate.

In one embodiment of the present invention, the step (a) includes the steps of:in cutting a first unit substrate and a second unit substrate adjacent to each other out of the mother substrate, forming the scribe lines on the mother substrate by moving the scribe forming means with respect to the mother substrate along an outer side portion adjacent to an outer peripheral portion of the mother substrate in the first unit substrate and the second unit substrate; (a-2)forming the scribe lines on the mother substrate by moving the scribe forming means with respect to the mother substrate along an inner side portion of side portions facing each other in the first unit substrate and the second unit substrate.

Thus, according to the mother substrate cutting method of the present invention, a first scribe line and a second scribe line can be formed without a pressure and movement of the scribe forming means with respect to the mother substrate being suspended. Thus, a scribing process time for forming the scribe lines can be reduced. Further, cracks do not reach sides of the mother substrate during the scribing process, and thus, the mother substrate is less likely to be cut by a force generated by an external factor. In this way, the scribe lines can be formed on the mother substrate. As a result, it is possible to prevent the mother substrate from being divided into two or more portions while the scribe lines are being formed.

In one embodiment of the present invention, the inner side portion of the second unit substrate opposes the inner side portion of the first unit substrate, and the step (a-2) includes the steps of: (a-2a) forming the scribe lines on the mother substrate by moving the scribe forming means with respect to the mother substrate along the inner side portion of the first unit substrate; (a-2b) forming the scribe lines on the mother substrate by moving the scribe forming means with respect to the mother substrate on the outer peripheral portion of the mother substrate after the step (a-2a) is performed; (a-2c) forming the scribe lines on the mother substrate by moving the scribe forming means with respect to the mother substrate along the inner side portion of the second unit substrate after the step (a-2b) is performed; and (a-2d) forming the scribe lines on the mother substrate by moving a pressure to the mother substrate on the outer peripheral portion of the mother substrate after the step (a-2c) is performed.

Thus, according to the mother substrate cutting method of the present invention, a first scribe line and a second scribe line can be formed without a movement of the scribe forming means with respect to the mother substrate being suspended. Thus, a scribing process time for forming the scribe lines can be reduced. Further, cracks do not reach sides of the mother substrate during the scribing process, and thus, the mother substrate is less likely to be cut by a force generated by an external factor. In this way, the scribe lines can be formed on the mother substrate. As a result, it is possible to prevent the mother substrate from being divided into two or more portions while the scribe lines are being formed.

In one embodiment of the present invention, the step (a) further includes a step for reduce the pressure to the mother substrate by the scribe forming means.

Thus, according to the mother substrate cutting method, pressure by the scribe forming means with respect to the mother substrate can be reduced. Thus, wearing due to the pressure to the mother substrate of the scribe forming means can be reduced.

In one embodiment of the present invention, the step (a) includes the steps of: forming the scribe lines by the scribe forming means along a first direction; and moving the scribe forming means with respect to the mother substrate such that the scribe lines formed along the first direction and the scribe lines to be formed along a second direction which is different from the first direction are linked with curved lines.

Thus, according to the mother substrate cutting method, a pressure to the mother substrate can be moved such that a scribe line formed along a first direction and a scribe line formed along a second direction are linked with curved line. Thus, damage to the scribing forming means generated by a change in direction of the scribing forming means from the first direction to the second direction can be reduced.

In one embodiment of the present invention, a plurality of unit substrates are one of glass substrates, quartz substrates, sapphire substrates, semiconductor wafers, ceramic substrates, solar cell substrates, liquid display panels, organic EL panels, inorganic EL panels, transmissive projector substrates, and reflective projector substrates.

Thus, according to the mother substrate cutting method, various unit substrates can be manufactured.

In one embodiment of the present invention, the step (b) includes a step of breaking the mother substrate by forming sub-saibe lines along the scribe lines.

Thus, according to the mother substrate cutting method, a scribing step and a breaking step can be performed by only forming scribe lines.

In one embodiment of the present invention, a mother substrate cutting method further comprises a step of forming the scribe lines and the sub-scribe lines by moving the scribe forming means with respect to the mother substrate without a pressure to the mother substrate by the scribe forming means being interrupted.

Thus, according to the mother substrate cutting method, scribe lines and sub-scribe lines can be formed without a movement of the scribe forming means with respect to the mother substrate being suspended. Thus, a cutting process time for cutting the mother substrate can be induced.

In one embodiment of the present invention, the step (b) includes a step of forming a first sub-scribe line along the first scribe line and a second sub-scribe line along the second scribe line by moving a pressure to the mother substrate without the pressure to the mother substrate by the scribe forming means being interrupted.

Thus, according to the mother substrate cutting method, a first sub-scribe line and a second sub-scribe line can be formed without a movement of the scribe forming means with respect to the mother substrate being suspended. Thus, a cutting process time for cutting the mother substrate can be reduced.

In one embodiment of the present invention, at least one of both end portions of the scribe line is a curved line.

Thus, the mother substrate cutting method can prevent cracks from being formed toward sides of the mother substrate.

According to another aspect of the present invention, there is provided a mother substrate scribing device comprising: scribe line forming means for forming scribe lines on a mother substrate; and control means for controlling the scribe line forming means, wherein the control means control the scribe line forming means so as to move the scribe forming means with respect to the mother substrate without a pressure to the mother substrate by the scribe forming means being interrupted, and to form a first scribe line for cutting a first unit substrate out of the mother substrate and a second scribe line for cutting a second unit substrate out of the mother substrate on the mother substrate.

In one embodiment of the present invention, the scribe line forming means includes: a scribing member for forming scribes on a surface of the mother substrate; and adjustment means for adjusting a pressure of the scribing member with respect to the surface of the mother substrate, and the control member controls the adjustment means.

In one embodiment of the present invention, the scribing member is a cutter wheel tip.

According to still another aspect of the present invention, there is provided a program for having a computer to perform each of the steps in the above-described mother substrate cutting method.

According to yet another aspect of the present invention, there is provided a computer readable recording medium on which the above-described program is recorded.

According to one aspect of the present invention, there is provided a mother substrate cutting device for cutting a plurality of unit substrates out of a mother substrate, comprising the means of: (a) forming scribe lines on the mother substrate; and (b) breaking the mother substrate along the scribe lines, wherein the means (a) includes a means of forming a first scribe line for cutting a first unit substrate out of the mother substrate and a second scribe line for cutting a second unit substrate out of the mother substrate on the mother substrate by moving without a pressure to the mother substrate by the scribe forming means being interrupted.

The means (a) further includes a means of forming n-th scribe line for cutting n-th unit substrate out of the mother substrate by moving without a pressure to the mother substrate being interrupted: and n is an integer equal to or larger than 3.

### EFFECTS OF THE INVENTION

According to the mother substrate cutting method, mother substrate scribing device, program and recording medium of the present invention, a first scribe line and a second scribe line can be formed without a movement of scribe forming means with respect to the mother substrate being suspended. Thus, a scribing process time for forming the scribe lines can be reduced. Further, cracks do not reach sides of the mother substrate during the scribing process, and thus, the mother substrate is less likely to be cut by a force generated by an external factor, In this way, the scribe lines can be formed on the mother substrate. As a result, it is possible to prevent the mother substrate from being divided into two or more portions while the scribe lines are being formed.

Further, according to the mother substrate cutting method, mother substrate scribing device, program and recording medium of the present invention, a pressure to the mother substrate by the scribe forming means can be reduced. Thus, wearing due to the pressure to the mother substrate of the scribe forming means can be reduced.

Furthermore, according to the mother substrate cutting method, mother substrate scribing device, program and recording medium of the present invention, the scribe forming means can be moved with inspect to the mother substrate such that a scribe line formed along a first direction and a scribe line formed along a second direction are linked with a curved line. Thus, damage to pressing means generated by a change in direction of the pressing means from the first direction to the second direction can be reduced.

Moreover, according to the mother substrate cutting method, mother substrate scribing device, program and recording medium of the present invention, various unit substrates can be manufactured.

Farther, according to the mother substrate cutting method, mother substrate scribing device, program and recording medium of the present invention, a scribing step and a breaking step can be performed by only forming the scribe lines.

Furthermore, according to the mother substrate cutting method, mother substrate scribing device, program and recording medium of the present invention, scribe lines and sub-scribe lines can be formed without a movement of a pressure to the mother substrate being suspended. Thus, a cutting process time for cutting the mother substrate can be reduced.

Moreover, according to the mother substrate cutting method, mother substrate scribing device, program and recording medium of the present invention, a first sub-scribe line and a second sub-scribe line can be formed without the movement of the pressure to the mother substrate being suspended. Thus, a breaking process time can be reduced.

Furthermore, according to the mother substrate cutting method, mother substrate scribing device, program and recording medium of the present invention, cracks can be prevented from being formed toward sides of the mother substrate because at least one of both end portions of the scribe line is a curved line.

### BRIEF DESCRIPTION OF THE DRAWINGS

Figure 1 shows a structure of a mother substrate cutting apparatus 100 according to an embodiment of the present invention.
Figures 2A and 2B show a structure of a scribing head 120.
Figure 3A and 3B show a structure of a scribing head 165 including a servo motor.
Figure 4A and 4B show a structure of a cutter holder 127.
Figures 5A through 5C show a structure of a scribing cutter 121.
Figure 6 shows a structure of a breaking device 152.
Figure 7 shows a structure of a breaking device 154, which is another example of the breaking device 152.
Figure 8 is a flow diagram showing a cutting process procedure for cutting a mother substrate 101 according to an embodiment of the present invention.
Figure 9 shows the mother substrate 101 used in a scribing step performed in step 802 (see Figure 8).
Figure 10 is a flow diagram showing a scribing procedure performed in the scribing step in step 802 (see Figure 8).
Figure 11 shows another example of the mother substrate 101 used in the scribing step performed in step 802 (see Figure 8).
Figure 12 shows the mother substrate 101 for cutting out nine unit substrates.
Figure 13 shows a part of the line to be scribed (curved lines Ra and Rb).
Figure 14 shows a part of a mother substrate cutting device which can out a bonded substrate which is formed by bonding two mother substrates.
Figure 15 shows an example of the mother substrate 101 used in the scribing step and the breaking step according to an embodiment of the present application.
Figure 16 is a flow diagram showing a scribing procedure performed by the scribing step and a breaking procedure performed by the breaking step according to an embodiment of the present invention.
Figure 17 shows a plurality of scribe lines formed by a scribe line forming method disclosed in Japanese Laid-Open Publication No. 2002-87836.
Figure 18 shows lines to be scribed formed on a first surface of a mother substrate 4.
Figure 19 shows an exemplary internal structure of a computer 149.

### DESCRIPTION OF THE PREFERRED EMBODIMENTS

Hereinafter, embodiments of the present invention will be described with reference to the drawings.

### 1. Mother substrate cutting apparatus 100

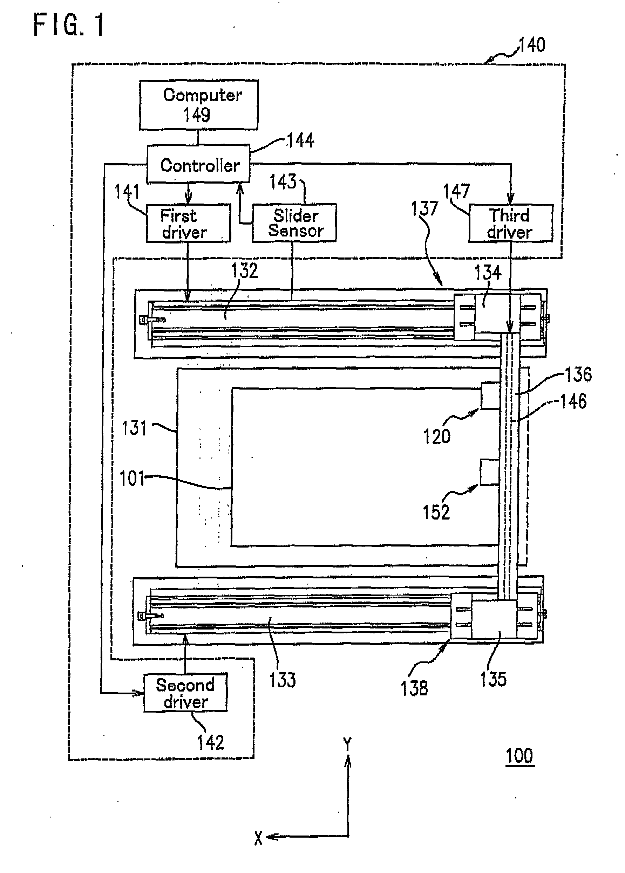

Figure 1 shows a structure of a mother substrate cutting apparatus 100 according to an embodiment of the present invention.

The mother substrate cutting apparatus 100 cuts a plurality of unit substrates cut of a mother substrate 101.

The mother substrate cutting apparatus 100 includes a table 131 for placing the mother substrate 101 thereon, a guide rail 132, a guide rail 133, a slider 134, a slider 135, a guide bar 136, a linear motor 137 and a linear motor 138.

The guide rail 132 and the guide rail 133 are provided in parallel to each other on the sides of the table 131. A mover of the linear motor 137 is attached to the slider 134. The slider 134 is provided on the guide rail 132 so as to be slidable along the guide rail 132. A mover of the linear motor 138 is attached to the slider 135. The slider 135 is provided on the guide rail 133 so as to be slidable along the guide rail 133.

A stator of a rail shape aligned along the guide rail 132 is provided on the linear motor 137. The linear motor 137 slides the slider 134 along the guide rail 132. A stator of a rail shape aligned along the guide rail 133 is provided on the linear motor 138. The linear motor 138 slices the slider 135 along the guide rail 133.

The guide bar 136 horizontally bridges between the slider 134 and the slider 135. A scribing head 120 and a breaking device 152 are attached to the guide bar 136 so as to be slidable along the guide bar 136.

The details of the structure of the scribing head 120 and the breaking device 152 will be described below.

The mother substrate cutting apparatus 100 further includes a control section 140. The control section 140 includes a controller 144, a first driver 141, a second driver 142, a third driver 147, a scribing head driving linear motor 146, a slider sensor 143, and a computer 149.

Following the instruction of the computer 149, the controller 144 controls the first driver 141 such that it drives the linear motor 137, the second driver 142 such that it drives the linear motor 138, and the third driver 147 such that it drives the scribing head driving linear motor 146.

The scribing head driving linear motor 146 is provided on the guide bar 136. The scribing head driving linear motor 146 has a stator of a rail shape aligned along the guide bar 136 and a mover which moves along the stator provided respectively in the scribing head 120 and the breaking device 152. The scribing head driving linear motor 146 moves the scribing head 120 and the breaking device 152 back and forth along the guide bar 136 between the ends of the guide bar 136.

The slider sensor 143 is provided near the guide rail 132. The slider sensor 143 detects the position of the slider 134 and outputs data indicating the detected position to the controller 144.

The details of the structure of the computer 149 will be described below.

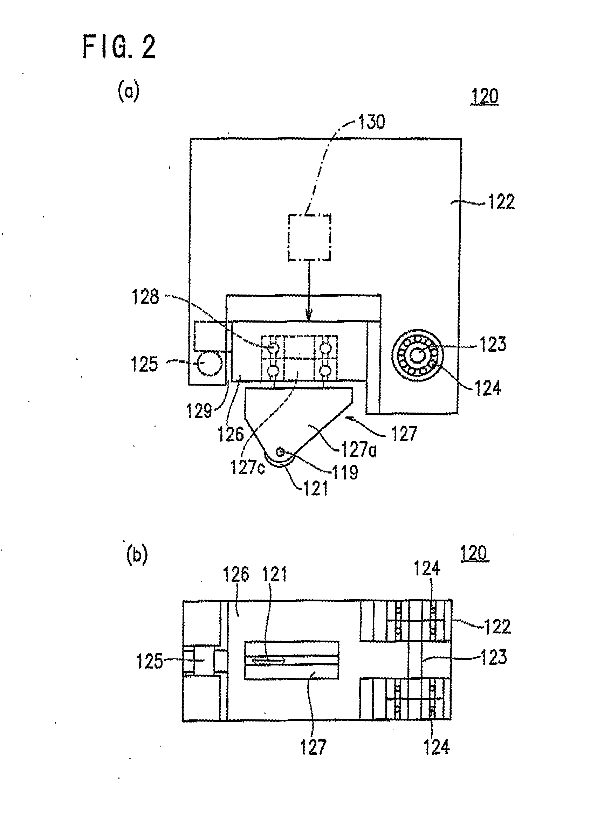

Figures 2A and 2B show a structure of the scribing head 120. Figure 2A is a front view of the scribing head 120; and Figure 2B is a bottom view of the scribing head 120.

The scribing head 120 includes a head main body portion 122, a bearing case 126, an inhibitory axis 125, a cutter holder 127, a scribing cutter 121, and energizing means 130.

The head main body portion 122 includes a spindle 123 and a bearing 124 inserted in a direction horizontal to the head main body portion 122. A notch portion 129 is formed in a lower part of the head main body portion 122. The bearing case 126 is accommodated in the notch portion 129.

The inhibitory axis 125 is provided in the head main body portion 122 so as to be in parallel with the spindle 123.

The bearing case 126 rotates around the spindle 123 in a vertical direction. One end of the bearing case 126 is coupled to the spindle 123. The other end of the bearing case 126 abuts the inhibitory axis 125 at the position where the inhibitory axis 125 is provided. The bearing case 126 holds the cutter holder 127 so as to be freely rotatable.

The cutter holder 127 includes a cutter holder main body portion 127a, and a rotary axis 127c which has a center of axle orthogonal to a surface of the mother substrate 101. The cutter holder 127 is attached to the bearing case 126 via a bearing 128 and rotates around the rotary axis 127c. The cutter holder main body portion 127a is formed integrally with the rotary axis 127c. The details of the cutter holder 127 will be described below.

The energizing means 130 is provided above the rotary axis 127c. The energizing means 130 may be, for example, an air cylinder. The energizing means 130 applies a downward force to the bearing case 126. As a result, a predetermined load is added to the scribing cutter 121 via the rotary axis 127c and the cutter holder 127.

The scribing cutter 121 forms scribe lines on the mother substrate 101. The scribing cutter 121 may be, for example, a diamond point cutter or a cutter wheel tip. The cutter holder 127 includes the scribing cutter 121 which is freely rotatable around a rotary axis 119.

In the example shown in Figures 1, 2A and 2B, the scribing head 120 functions as "scribe line forming means for forming scribe lines on a mother substrate". The control section 140 functions as "control means for controlling the scribe line forming means to move the scribe line forming means with respect to the mother substrate without a pressure of the scribe line forming means to the mother substrate being interrupted, and to form a first scribing line for cutting a first unit substrate out of the mother substrate and a second scribe line for cutting a second unit substrate out of the mother substrate on the mother substrate". However, a mother substrate scribing device having any kind of structure is included in the scope of the present invention as long as it has functions of the "scribe line forming means for forming scribe lines on a mother substrate" and the "control means for controlling the scribe line forming means to move the scribe line forming means with respect to the mother substrate without a pressure of the scribe line forming means to the mother substrate being interrupted, and to form a first scribing line for cutting a first unit substrate out of the mother substrate and a second scribe line for cutting a second unit substrate out of the mother substrate on the mother substrate". For example, a scribing head may include a servo motor.

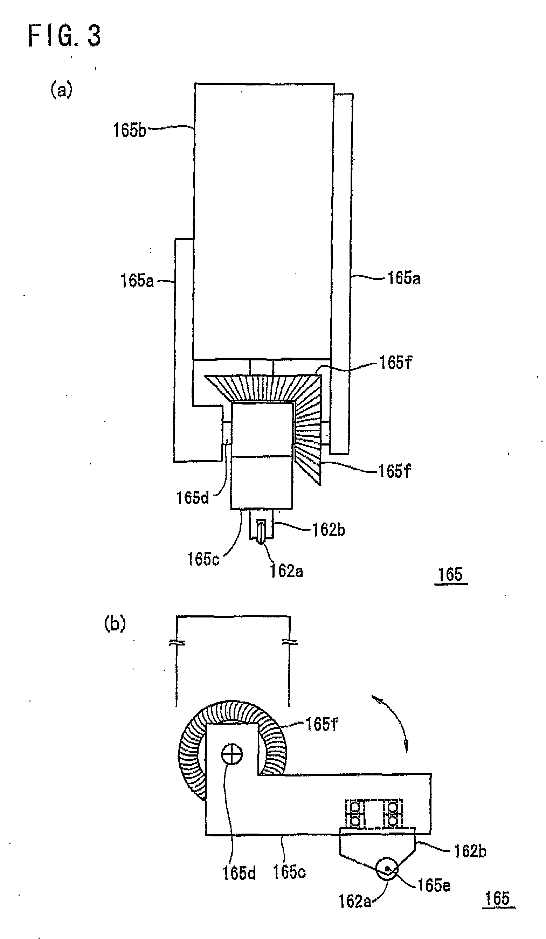

Figure 3A and 3B show a structure of a scribing head 165 including a servo motor. Figure 3A is a side view of the scribing head 165; and Figure 3B is a front view of a main part of the scribing head 165.

The scribing head 165 includes a pair of side walls 165a, a servo motor 165b, a holder holding assembly 165c, a spindle 165d, an axis 165e, a scribing cutter 162a, a cutter holder 162b, and a pair of flat bevel gears 165f.

The servo motor 165 is held between the pair of side walls 165a. In a lower part of the pair of side walls 165a, the holder holding assembly 165c is provided around the spindle 165d so as to be freely rotatable. The shape of the holder holding assembly 165c is the shape of the letter L (see Figure 3B).

In the cutter holder 162b, the scribing cutter 162a is provided around the axis 165e so as to be freely rotatable. The cutter holder 162b is attached in a front part of the holder holding assembly 165c (on the right-hand side in Figure 3B).

A rotary axis is provided in the servo motor 165b. One of the pair of flat bevel gears 165f is attached to the rotary axis and the other of the pair of flat bevel gears 165f is attached to the spindle 165d such that the pair of flat bevel gears 165f engage each other. When the servo motor rotates in a forward or reverse direction, the holder holding assembly 165c is rotated in a vertical direction having the spindle 165d as a fulcrum. As a result, the scribing cutter 162a moves up and down with respect to the surface of the mother substrate 101. Further, the servo motor 165b transmits a rotation torque of the servo motor 165b to the scribing cutter 162a so as to adjust a load applied to the mother substrate 101 by the scribing cutter 162a in accordance with an ares in which the scribe lines to be formed.

The servo motor 165b immediately senses a change in the scribing load due to a variance in a resistance during the scribing process which is applied to the scribing cutter 162a during the process for forming scribing lines on the mother substrate 101, and adjusts a rotation torque of the servo motor 165b in accordance with the change in the scribing load.

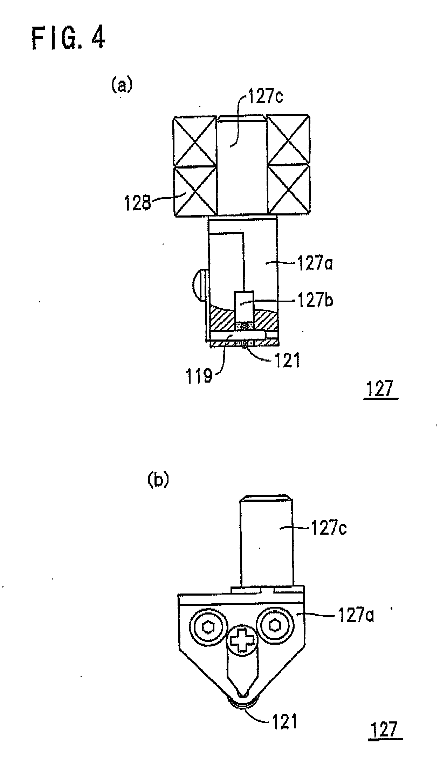

Figure 4A and 4B show a structure of the cutter holder 127. Figure 4A is a front view of the cutter holder 127 with a part of it fractured; and Figure 4B is a side view of the cutter holder 127. In Figures 4A and 4B, the same components as those in Figures 2A and 2B are denoted by the same reference numerals.

The cutter holder 127 includes the cutter holder main body portion 127a and the rotary axis 127c.

In a lower part of the cutter holder main body portion 127a, a groove 127b having a bottom opened is formed. In an upper part of the cutter holder main body portion 127a, the rotary axis 127c extending upward is formed. The rotary axis 127c is held to the bearing case 126 via the bearing 128 so as to be freely rotatable.

The scribing cutter 121 is provided around the rotary axis 119 which is parallel to the mother substrate 101 so as to be freely rotatable.

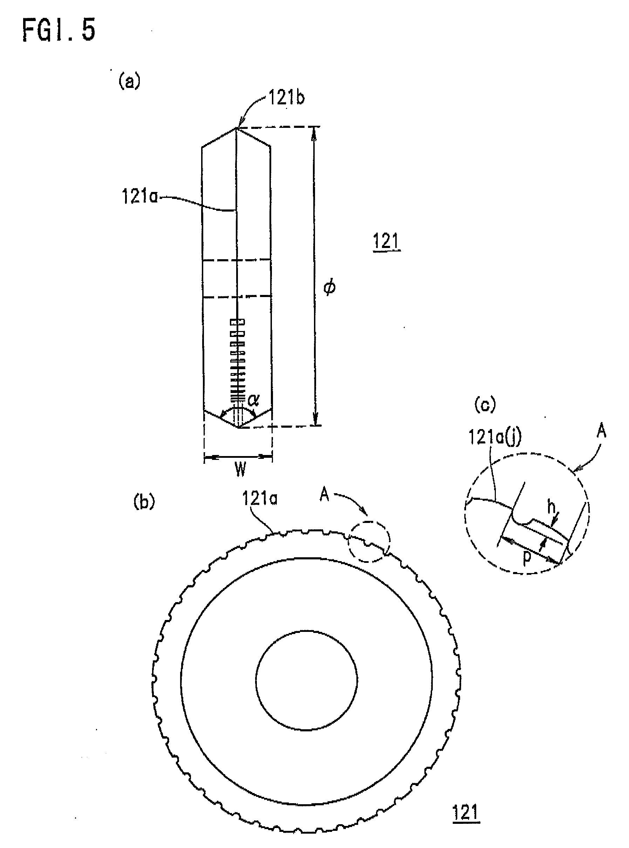

Figures 5A through 5C show a structure of the scribing cutter 121. Figure 5A is a front view of the scribing cutter 121; Figure 5B is a side view of the scribing cutter 121; and Figure 5C is an enlarged view of a part (portion A) of the scribing cutter 121 shown in Figure 5B.

The scribing cutter 121 may be, for example, a cutter wheel tip. The scribing cutter 121 shown in Figures 5A through 5C is disclosed in Japanese Patent No. 3074143 of the same Applicant as the present application.

The scribing cutter 121 is a wheel of a disc shape (diameter φ, thickness W). On an outer peripheral surface of the scribing cutter 121, a blade edge portion 121a is formed. The blade edge portion 121a protrudes toward the outer peripheral direction of the scribing cutter 121 so as to be in the shape of letter V. In the blade edge portion 121a, a blade 121b of obtuse angle α is formed.

In the blade 127b, a plurality of protrusions j having a predetermined pitch p and a predetermined height h are formed. The size of the plurality of protrusions j is in the order of micrometer, and protrusions j cannot be recognized with the naked eye.

The scribing cutter 121 has a very high ability to form vertical cracks along the thickness direction of the mother substrate 101. The scribing cutter 121 can form deep vertical cracks, and also can suppress formation of cracks in a horizontal direction along the surface of the mother substrate 101.

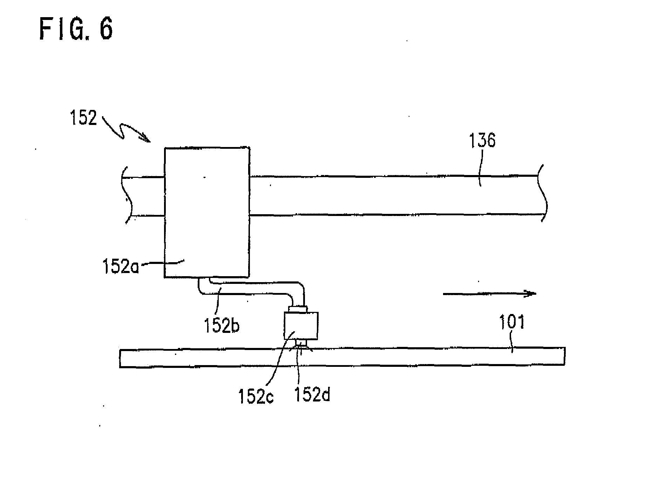

Figure 6 shows a structure of the breaking device 152.

The breaking device 152 includes a main body portion 152a, a flexible horse 152b for passing through steam, a nozzle head 152c, and a nozzle portion 152d for spraying the steam downward.

The main body portion 152a is attached to the guide bar 136 so as to be slidable along the guide bar 136.

One end of the horse 152b is attached to the main body portion 152a, and the other end of the horse 152b is connected to the nozzle head 152c such that it can circle around.

The nozzle bead 152c rotates around a vertical axis. On the bottom side of the nozzle head 152c, the nozzle portion 152d is provided.

In the nozzle portion 152d, a steam spray opening in a shape of, for example, a circle, ellipse, rectangle, or slit, is formed. The nozzle portion 152d breaks the mother substrate 101 along the scribe lines by spraying the steam to the scribe lines.

By spraying the steam at the temperature at which the mother substrate 101 expands to the scribe lines by the breaking device 152, the vertical cracks running out from the scribe lines are extended in the thickness direction of the mother substrate 101. The steam sprayed to the vertical cracks having openings in the order of micrometer penetrates into the vertical cracks due to a capillary phenomenon. The penetrated liquid is expanded (cubical expansion), and the vertical cracks are extended to a back surface of the mother substrate 101.

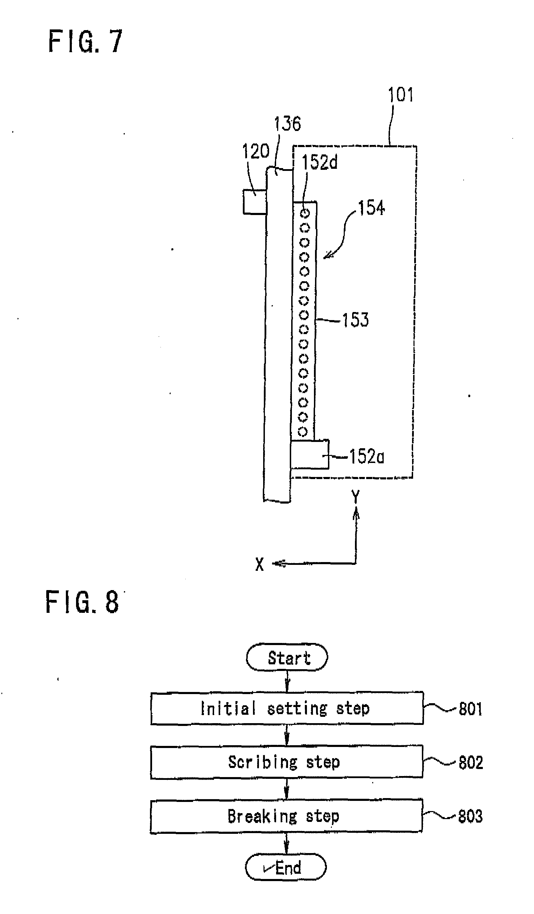

Figure 7 shews a structure of a breaking device 154, which is another example of the breaking device 152.

The breaking device 154 includes a main body portion 152a, a nozzle unit 153, and a plurality of nozzle portions 152d. The plurality of nozzle portions 152d are provided on the nozzle unit 153. The nozzle unit 153 is provided on the guide bar 136. With the guide bar 136 being moved in X direction, steam is sprayed to the surface of the mother substrate 101 on which the scribe lines have been formed.

A medium sprayed by the breaking device 152 or the breaking device 154 is not limited to stream. The medium may be any heating fluid as long as it has a temperature at which the substrate expands. The heating fluid may be, for example, steam, hot water, or a fluid including steam and hot water.

In the example shown in Figures 6 and 7, the breaking device 152 and the breaking device 154 function as "means for breaking the mother substrate along the scribing lines". A breaking device having any kind of structure is included in the scope of the present invention, as long as it has a function of "breaking the mother substrate along the scribing lines". For example, a breaking device may break the mother substrate 101 along the scribe lines by heating or cooling the scribe lines or portions near the scribe lines.

Heating the scribe lines or the potions near the scribe lines can be performed by, for example, a heater, or laser bean irradiated from a laser oscillator. Cooling an area in which the scribe lines are formed can be performed by, for example, spraying a cooling medium (such as, CO₂, He, N₂) to the area using a cooling nozzle.

In this way, by heating or cooling the scribe lines or the potions near the scribe lines, vertical cracks can be extended in the thickness direction of the substrate without mechanically applying a bending moment along the scribe lines.

The cooling medium may be, for example, a cooling liquid. However, the cooling medium is not limited to a cooling liquid. The cooling medium includes at least one of gas and liquid. The gas may be, for example, compressed air, helium, or argon. The liquid may be, for example, water or liquid helium. The cooling medium may be, for example, a combination of these gases and liquids.

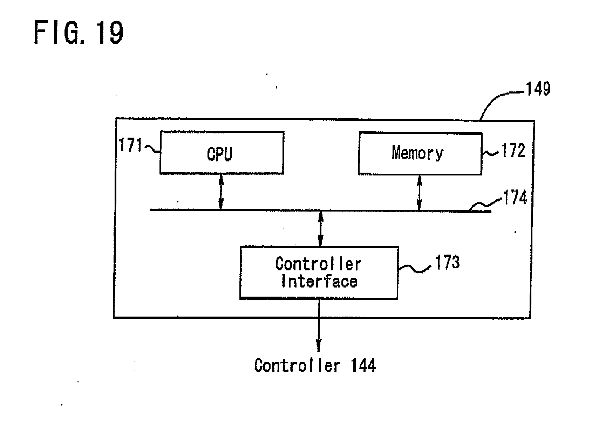

Figure 19 shows an exemplary internal structure of the computer 149. The computer 149 includes a CPU 171, a memory 172, and a controller interface 173. Components included in the computer 149 are connected to each other via bus 174.

The memory 172 stores a program for having the computer 149 to perform a cutting process (hereinafter, referred to as a cutting process program). The cutting process program may be previously stored in the memory 172 when the computer 149 is shipped. Alternatively, the cutting process program may be stored in the memory 172 after the computer 149 is shipped. For example, a user may download the cutting process program from a specific website on the Internet at a charge or for free, and install the downloaded program to the computer 149. In the case where the cutting process program is recorded on a computer readable recording medium such as a flexible disc, CD-RCM, DVD-ROM and the like, the cutting process program may be installed to the computer 149 by using an input device (for example, a disc drive device). The installed program is stored in the memory 172.

The CPU 171 may include means for setting lines to be scribed. The means for setting lines to be scribed creates a program for setting the lines to be scribed to be a single line (a single stroke) based on information regarding an arrangement of a plurality of unit substrates (for example, the number of columns and rows of the plurality of unit substrates, presence or absence of a space between adjacent unit substrates, or the size of the space between adjacent unit substrates) which has been input to the means for setting lines to be scribed. The lines to be scribed are lines which are planned for cutting a plurality of unit substrates out of the mother substrate 101. Following the program for setting the lines to be scribed in a single stroke, it is possible to set the line to be scribed in a single stroke. Herein, the "line to be scribed in a single stroke" means one continuous line to be scribed which is formed for taking out a plurality of unit substrates from the mother substrate.

According to the present invention, it is possible to form the scribe line in a single stroke. Herein, the "scribe line in a single stroke" means one continuous line to be scribed which is formed for taking out a plurality of unit substrates from the mother substrate. The scribe line in a single stroke is formed without the scribing cutter being lifted from the mother substrate from the start point to the end point of the scribe line in a single stroke while the pressure to the mother substrate is kept (maintained) from the start point to the end point of the scribe line in a single stroke.

The program for setting the line to be scribed in a single stroke and a program for forming the scribe lines in the cutting process program are formed based on the rules for scribing in a single stroke.

### 2. Mother substrate cutting method

Figure 8 shows a cutting process procedure for cutting the mother substrate 101 according to an embodiment of the present invention. The execution of the cutting process is controlled by, for example, the computer 149.

Hereinafter, a procedure for cutting the mother substrate 101 by the mother substrate cutting apparatus 100 will be described step by step.

The procedure for cutting the mother substrate 101 by the mother substrate cutting apparatus 100 includes a scribing step and a breaking step. As necessary, an initial setting step is performed.

Step 801: The initial setting step is performed. The initial setting step is a step for setting an initial state of the mother substrate cutting apparatus 100 before starting the scribing step. Details of the initial setting step will be described below.

After the initial setting step is finished, the process moves to step 802.

Step 802: The scribing step is performed. The scribing step is a step for forming scribe lines on the mother substrate 101 The details of the scribing step will be described below.

After the scribing step is finished, the process moves to step 803.

Step 803: The breaking step is performed. The breaking step is a step for breaking the mother substrate 101 along the scribe lines. The details of the breaking step will be described below.

After the breaking step is finished, the process ends.

### 2-1. Initial setting step

Hereinafter, the details of the initial setting step performed in step 801 will be described.

The mother substrate 101 is positioned on the table 131 and fixed on the table 131.

The pressure of compressed air to be put into an air cylinder provided inside the head main body portion 122 is set based on various conditions for scribing the mother substrate 101 (the thickness, material and the like of the mother substrate). Based on the setting, the scribing cutter 121 presses the mother substrate 101 with a predetermined load.

Next, a zero point (reference point) detecting step is performed. In the zero point detecting step, the position of the surface of the mother substrate 101 is detected. The position of the surface of the mother substrate 101 is necessary for moving the scribing head 120 along a direction vertical to the mother substrate 101.

In the zero point detecting step, a control section 140 moves the scribing head 120 toward a position above the mother substrate 101. Next, a scribing head moving means (not shown) moves the scribing head 120 downward in a vertical direction with respect to the surface of the mother substrate 101. When the scribing cutter 121 is in contact with the mother substrate 101 and the bearing case 126 is spaced apart from the inhibitory axis 125, a position detection mechanism of the scribing head moving means detects the position of the scribing head 120. The position of the scribing head 120 at the moment is determined as the position of the surface of the mother substrate 101, and zero point detection data indicating the position of the surface of the mother substrate 101 is written into recording means included in the controller. The zero point detecting step is performed as described above.

When the zero point detection is finished, the scribing head moving means moves the scribing head 120 upward to a predetermined waiting position (a waiting position above the surface of the mother substrate 101).

### 2-2. Scribing step

Hereinafter, the details of the scribing step performed in step 802 (see Figure 8) will be described.

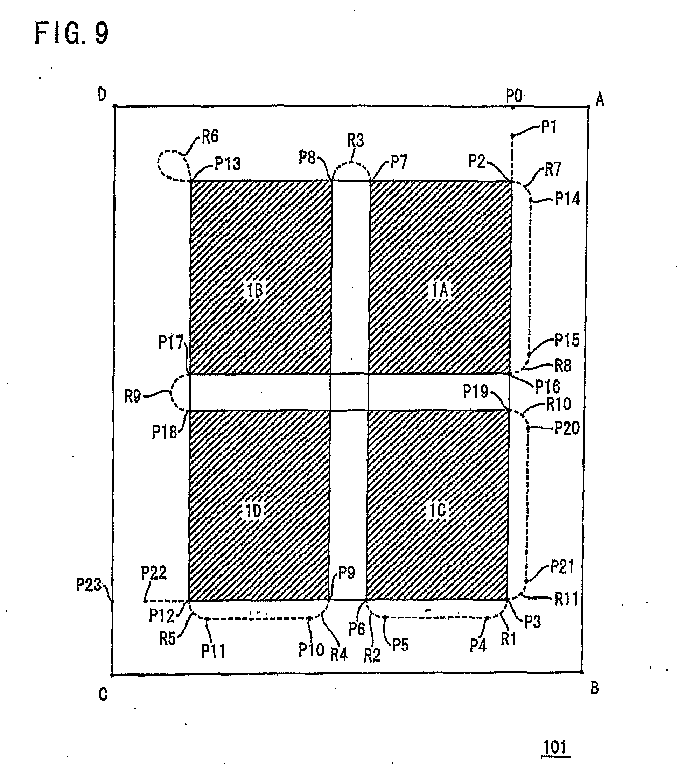

Figure 9 shows the mother substrate 101 used in the scribing step performed in step 802 (see Figure 8). A line to be scribed shown in Figure 9 is formed for removing the unit substrates 1A, 1B, 1C and 1C (shaded area) out of the mother substrate. This line to be scribed includes one continuous line, starting at point P1, passing through points P2-P21, in this order, and ending at point P22. The scribing head 120 is moved along the line to be scribed to form the scribe lines on the mother substrate 101.

The line to be scribed includes a plurality of straight lines (straight line P1-P2, straight line P2-P3, straight line P4-P5, straight line P6-P7, straight line P8-P9, straight line P10-P11, straight line P12-P13, straight line P13-P2, straight line P14-P15, straight line P16-P17, straight line P18-P19, straight line P20-P21, straight line P3-P12, and straight line P12-P22), and a plurality of curved lines (curved lines R1 through R11).

The mother substrate cutting apparatus 100 forms scribe lines along the line to be scribed and breaks the mother substrate 101 along the scribe lines to cut unit substrates 1A, 1B, 1C and 1D out of the mother substrate 101.

The unit substrate 1A is a portion of the mother substrate 101 which is defined by the straight line P2-P3, straight line P6-P7, straight line P13-P2 and straight line P16-P17. The unit substrate 18 is a portion of the mother substrate 101 which is defined by the straight line P8-P9, straight line P12-P13, straight line P13-P2, and straight line P16-P17. The unit substrate 1C is a portion of the mother substrate 101 which is defined by the straight line P2-P3, straight line P6-P7, straight line P18-P19, and straight line P3-P12. The unit substrate 1D is a portion of the mother substrate 101 which is defined by straight line P8-P9, straight line P12-P13, straight line P18-P19, and straight line P3-P12. The unit substrates 1A, 1B, 1C and 1D are located with appropriate spaces therebetween.

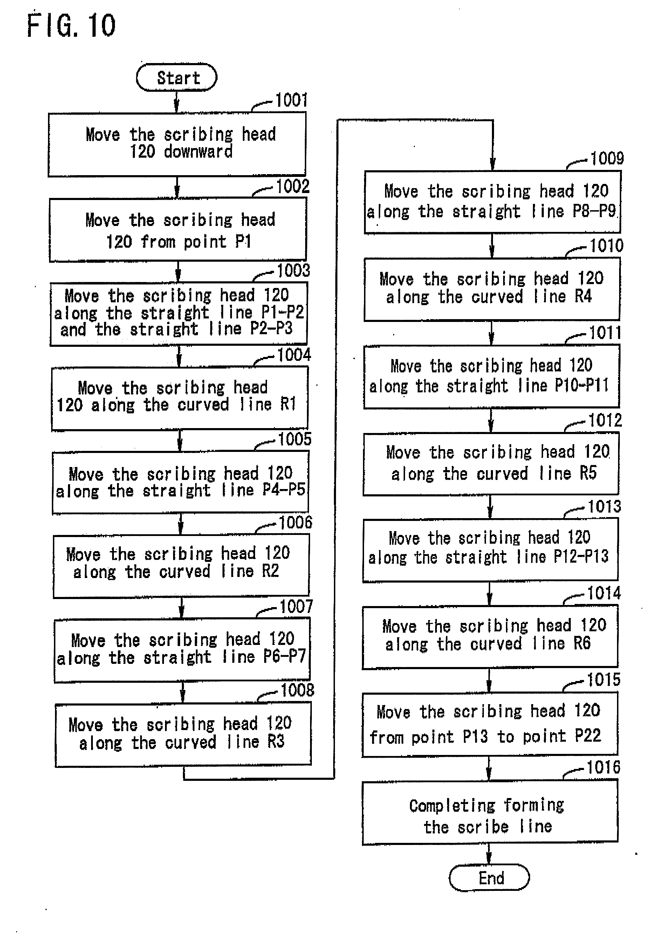

Figure 10 shows a scribing procedure performed in the scribing step in step 802 (see Figure 8).

Hereinafter, the scribing procedure will be described step by step with reference to Figures 9 and 10.

Step 1001: The scribing head moving means moves the scribing head 120 at the predetermined waiting position downward. When the scribing head 120 is moved downward by the scribing head moving means from the predetermined waiting position to the position at 0.1 mm to 0.2 mm from an upper surface of the mother substrate 101, the scribing cutter 121 presses the mother substrate 101 in a manner such that it can sufficiently conform to a surface roughness of the mother substrate 101 fixed on the table 131. A controller 144 issues an instruction to the third driver 147 to drive the scribing head driving linear motor 146. As the scribing head driving linear motor 146 being driven, the scribing head 120 moves along the guide bar 136.

Step 1002: Formation of scribe line is started from an outer peripheral portion of the mother substrate 101 (outside area of area P2-P3-P12-P13 and inside area of area A-B-C-D). Mace specifically, the control auction 140 presses the scribing cutter 121 to the mother substrate 101 and moves the scribing head 120 along the line to be scribed from point P1 (point in the outer peripheral portion of the mother substrate) to form the scribe line.

Step 1003: The scribe line is formed along the outer side portion of the unit substrate. Mace specifically, the control section 140 presses the scribing cutter 121 to the mother substrate 101 and moves the scribing head 120 along the straight line P1-P2 and the straight line P2-P3 to form the scribe line.

Step 1004: The scribe line is formed in the outer peripheral portion of the mother substrate 101. More specifically, the control section 140 presses the scribing cutter 121 to the mother substrate 101, and moves the scribing head 120 along the curved line R1 to form the scribe line. The control section 140 moves the scribing head 120 such that a track of the scribing head 120 draws a circular arc having a center angle of 90 degree (curved line R1).

Step 1005: The scribe line is formed in the outer peripheral portion of the mother substrate 101. More specifically, the control section 140 presses the scribing cutter 121 to the mother substrate 101 and moves the scribing head 120 along the straight line P4-P5 to form the scribe line.

Step 1006: The scribe line is formed in the outer peripheral portion of the mother substrate 101. More specifically, the control section 140 presses the scribing cutter 121 to the mother substrate 101, and moves the scribing head 120 along the curved line R2 to form the scribe line. The control section 140 moves the scribing head 120 such that a track of the scribing head 120 draws a circular are having a center angle of 90 degree (curved line R2).

Step 1007: The control section 140 presses the scribing cutter 121 to the mother substrate 101 and moves the scribing head 120 to an area between the unit substrates to form the scribe line along an inner side portion of an side portion facing the adjacent unit substrate 1D in the width direction of the unit substrate 1C and an inner side portion of the unit substrate 1A. More specifically, the control section 140 presses the scribing cutter 121 to the mother substrate 101 and moves the scribing head 120 along the straight line P6-P7 to form the scribe line.

Step 1008: The scribe line is formed in the outer peripheral portion of the mother substrate 101. More specifically, the control section 140 presses the scribing cutter 121 to the mother substrate 101, and moves the scribing head 120 along the curved line R3 to form the scribe line. The control section 140 moves the scribing head 120 such that a track of the scribing head 120 draws a circular arc having a center angle of 180 degree (curved line R3).

Step 1009: The control section 140 presses the scribing cutter 121 to the mother substrate 101 and moves the scribing head 120 to an area between the unit substrates to form the scribe line along an inner side portion of the unit substrates 1B and 1D. More specifically, the control section 140 presses the scribing cutter 121 to the mother substrate 101 and moves the scribing head 120 along the straight line P8-P9 to form the scribe line.

Step 1010: The scribe line is formed in the outer peripheral portion of the mother substrate 101. More specifically, the control section 140 presses the scribing cutter 121 to the mother substrate 101, and moves the scribing head 120 along the curved line R4 to form the scribe line. The control section 140 moves the scribing head 120 such that a track of the scribing head 120 draws a circular are having a center angle of 90 degree (curved line R4).

Step 1011: The scribe line is formed in the outer peripheral portion of the mother substrate 101. More specifically, the control section 140 presses the scribing cutter 121 to the mother substrate 101 and moves the scribing head 120 along the straight line P10-P11 to form the scribe line.

Step 1012; The scribe line is formed in the outer peripheral portion of the mother substrate 101. More specifically, the control section 140 presses the scribing cutter 121 to the mother substrate 101, and moves the scribing head 120 along the curved line R5 to form the scribe line. The control section 140 moves the scribing head 120 such that a track of the scribing head 120 draws a circular are having a center angle of 90 degree (curved line R5).

Step 1013: The scribe line is formed along the outer side portion of the mother substrate in the unit substrates 1D and 1B. More specifically, the control section 140 presses the scribing cutter 121 to the mother substrate 101 and moves the scribing head 120 along the straight line P12-P13 to form the scribe line.

Step 1014: The scribe line is formed in the outer peripheral portion of the mother substrate 101. More specifically, the control section 140 presses the scribing cutter 121 to the mother substrate 101, and moves the scribing head 120 along the curved line R6 to form the scribe line. The control section 140 moves the scribing head 120 such that a track of the scribing head 120 draws a smooth curved line (curved line R6).

Step 1015: The control section 140 presses the scribing cutter 121 to the mother substrate 101, and moves the scribing head 120 along the straight line P13-P2, the curved line R7, the straight line P14-P15, the curved line R8, the straight line P16-F17, the curved line R9, the straight line P18-P19, the curved line R10, the straight line P20-P21, the curved line R11, the straight line P3-P12 and the straight line P12-P22 in this order to form the scribe line.

Step 1016: The control section 140 finishes the formation of the scribe lines at point P22.

The scribing head moving means moves the scribing head 120 to the predetermined waiting position to finish the scribing step.

As shown by steps 1001 through 1016, the control section 140 presses the scribing cutter 121 to the mother substrate 101 without the pressure to the mother substrate 101 applied by the scribing cutter 121 being interrupted and moves the scribing cutter 121 from point P1 to point P22 to form the scribe lines on the mother substrate for cutting the unit substrates 1A, 1B, 1C, and 1D out of the mother substrate 101.

According to an embodiment of the present invention, the control section 140 controls the scribing head 120 such that the scribing cutter 121 is pressed to the mother substrate 101 and the scribing cutter 121 is moved from point P1 to point P22. Thus, the scribe lines can be formed without the movement of the pressure to the mother substrate being suspended. As a result, a time for the scribing process for forming the scribing lines can be reduced. Further, the scribe lines can be formed on the mother substrate without a scribe line reaching the sides of the mother substrate. Thus, the mother substrate can be prevented from being divided into two or more portions while the scribe lines are being formed.

The plurality of the unit substrates are not necessarily located on the mother substrate 101 with appropriate spaces therebetween.

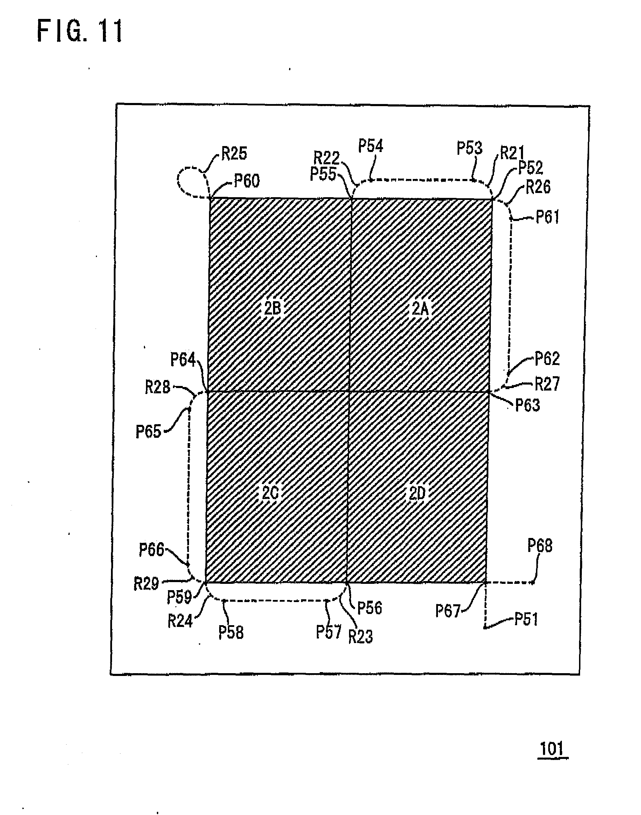

Figure 11 shows another example of the mother substrate 101 used in the scribing step performed in step 802 (see Figure 8). On the mother substrate 101, the line to be scribed is formed. The scribing head 120 is moved along the line to be scribed to form the scribe lines on the mother substrate.

The line to be scribed includes a plurality of straight lines (straight line P51-P67, straight line P67-P52, straight line P53-P54, straight line P55-P56, straight line P57-P58, straight line P59-P60, straight line P60-P52, straight line P61-P62, straight line P63-P64, straight line P65-P66, straight line P59-P67, and straight line P67-P68), and a plurality of curved lines (curved lines R21 through R29).

The mother substrate cutting apparatus 100 forms scribe lines along the line to be scribed and breaks the mother substrate 101 along the scribe lines to cut unit substrates 2A, 2B, 2C and 2D out of the mother substrate 101.

The unit substrate 2A is a petition of the mother substrate 101 which is defined by the straight line P67-P52, straight line P55-P56, straight line P60-P52, and straight line P63-P64. The unit substrate 2B is a portion of the mother substrate 101 which is defined by the straight line P55-P56, straight line P59-P60, straight line P60-P52, and straight line P63-P64. The unit substrate 2C is a portion of the mother substrate 101 which is defined by the straight line P55-P56, straight line P59-P60, straight line P63-P64, and straight line P59-P67. The unit substrate 2D is a portion of the mother substrate 101 which is defined by straight line P67-P52, straight line P55-P56, straight line P63-P64, and straight line P59-P67.

The control section 140 presses the scribing cutter 121 to the mother substrate 101 and moves the scribing head 120 along the straight line P51-P67, the straight line P67-P52, the curved line R21, the straight line P53-P54, the curved line R22, the straight line P55-P56, the curved line R23, the straight line P57-P58, the curved line R24, the straight line P59-P60, the curved line R25, the straight line P60-P52, the curved line R26, the straight line P61-P62, the curved line R27, the straight line P63-P64, the curved line R28, the straight line P65-P66, the curved line 29, the straight line P59-P67, and the straight line P67-P68 in this order to form the scribe lines.

The number of the unit substrates cut out of the mother substrate 101 is not limited to four. The number of the unit substrates cut out of the mother substrate 101 may be any number of two or more.

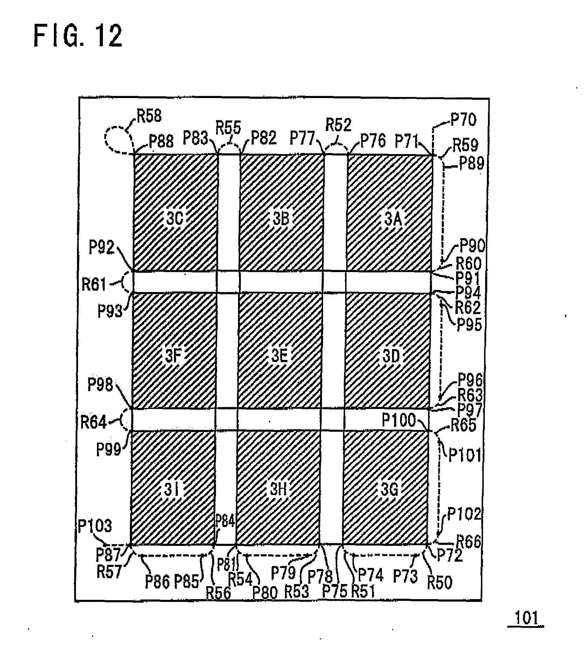

Figure 12 shows the mother substrate 101 for cutting out nine unit substrates. On the mother substrate 101, the line to be scribed is formed. The scribing head 120 is moved along the line to be scribed to form the scribe lines on the mother substrate 101.

The line to be scribed includes a plurality of straight lines (straight line P70-P71. straight line P71-P72, straight line P73-P74, straight line P75-P76, straight line P77-P78, straight line P79-P80, straight line P81-P82, straight line P83-P84, straight line P85-P86, straight line P87-P88, straight line P88-P71, straight line P89-P90, straight line P91-P92, straight line P93-P94, straight line P95-P96, straight line P97-P98, straight line P99-P100, straight line P101-P102, straight line P72-P87, and straight line P87-P103), and a plurality of curved lines (curved lines R50 through R66).

The mother substrate cutting apparatus 100 forms scribe lines along the line to be scribed and breaks the mother substrate 101 along the scribe lines to cut unit substrates 3A, 3B, 3C, 3D, 3E, 3F, 3G, 3H, and 3I out of the mother substrate 101.

The unit substrate 3A is a portion of the mother substrate 101 which is defined by the straight line P71-P72, straight line P75-P76, straight line P88-P71 and straight line P91-P92. The unit substrate 3B is a portion of the mother substrate 101 which is defined by the straight line P77-P78, straight line P81-P82, straight line P88-P71, and straight line P91-P92. The unit substrate 3C is a portion of the mother substrate 101 which is defined by the straight line P83-P84, straight line P87-P88, straight line P88-P71, and straight line P91-P92. The unit substrate 3D is a portion of the mother substrate 101 which is defined by straight line P71-P72, straight line P75-P76, straight line P93-P94, and straight line P97-P98. The unit substrate 3E is a portion of the mother substrate 101 which is defined by the straight line P77-P78, straight line P81-P82, straight line P93-P94. and straight line P97-P98. The unit substrate 3F is a portion of the mother substrate 101 which is defined by the straight line P83-P84, straight line P87-P88, straight line P93-P94, and straight line P97-P98. The unit substrate 3G is a portion of the mother substrate 101 which is defined by the straight line P71-P72, straight line P75-P76, the straight line P99-P100, and straight line P72-P87. The unit substrate 3H is a portion of the mother substrate 101 which is defined by the straight Line P77-P78, straight line P81-P82, straight line P99-P100 and straight line P72-P87. The unit substrate 3I is a portion of the mother substrate 101 which is defined by the straight line P83-P84, straight line P87-P88, straight line P99-P100, and straight line P72-P87. The unit substrates 3A, 3B, 3C, 3D, 3E, 3F, 3G, 3H, and 3I are located with appropriate spaces therebetween.

The control section 140 presses the scribing cutter 121 to the mother substrate 101 and moves the scribing head 120 along the straight line P70-P71, straight line P71-P72, curved line R50, straight line P73-P74, curved line R51, straight line P75-P76, curved line R52, straight line P77-P78, curved line R53, straight line P79-P80, curved line R54, straight line P81-P82, curved line R55, straight line P83-P84, curved line R56, straight line P85-P86, curved line R57, straight line P87-P88, curved line 58, straight line P88-P71, curved line R59, straight line P89-P90, curved line R60, straight line P91-P92, curved line R61, straight line P93-P94, curved line R62, straight line P95-P96, curved line R63, straight line P97-P98, curved line R64, straight line P99-P100, curved line R65, straight line P101-P102, curved line R66, straight line P72-P87, and straight line P87-P103 in this order to form the scribe lines.

In the scribing procedure according to an embodiment of the present invention, the scribe lines are formed by moving the scribing head 120 so as to follow the curved lines such that a scribe line formed along a first direction is linked to a scribe line to be formed along a second direction different from the first direction with a curved line (for example, 2.0R through 6.0 R). For example, in a portion where the moving direction of the scribing head 120 is changed from a direction parallel to the straight line P2-P3 to a direction parallel to the straight line P4-P5 (curved line R1), the control section 140 presses the scribing cutter 121 to the mother substrate 101 and moves the scribing head 120 along the curved line R1 to form the scribe line (see Figure 9).

Since the pressure to the mother substrate 101 can be moved such that the scribe line formed along the first direction and the scribe line formed along the second direction are linked with a curved line, a damage to the scribing cutter 121 caused by a change in the direction of the scribing cutter 121 from the first direction to the second direction can be reduced.

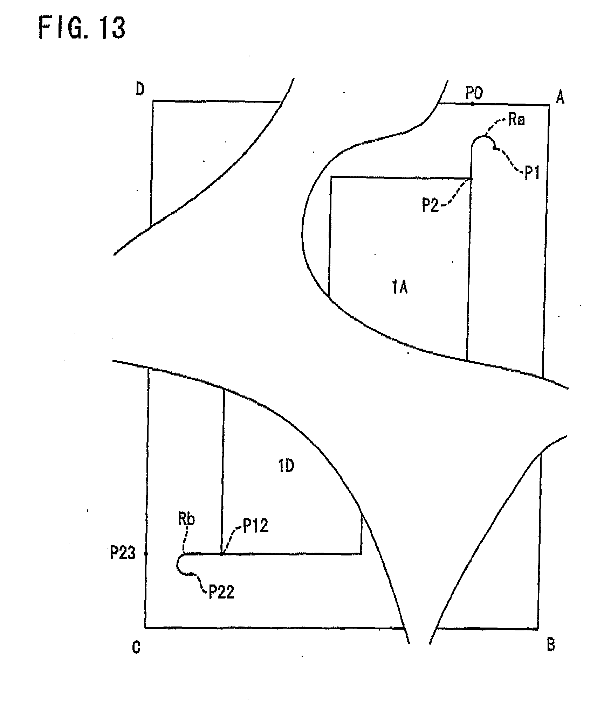

Figure 13 shows a part of the line to be scribed (curved lines Ra and Rb).

The scribing head 120 starts forming the scribe line from point P1. Then, the control section 140 moves the scribing head 120 such that a scribe line is formed along the curved line Ra by the scribing head 120. When the scribe line is formed along a curved line which passes point P1 and point P2 in this way instead of being formed along a straight line which passes point P1 and point P2, it is possible to prevent a crack from being formed from point P1 toward an outer side of the mother substrate 101 (side AD of the mother substrate 101). For example, when the scribe line is formed along the curved line which passes point P1 and point P2, it is possible to prevent a crack can from being formed on the straight line P0-P1.

Then, the control section 140 moves the scribing head 120 such that the scribe line is formed along the curved line Rb and finishes the formation of the scribe lines at point P22. When the scribe line is formed along a curved line which passes point P12 and point P22 in this way instead of being formed along a straight line which passes point P12 and point P22, it is possible to prevent a crack from being formed from point P22 toward an outer side of the mother substrate 101 (side CD of the mother substrate 101). For example, when the scribe line is formed along the curved line which passes point P12 and point P22, it is possible to prevent a crack from being formed on the straight line P22-P23.

In the scribing step according to an embodiment of the present invention, a combination of the point to start the formation of the scribe lines and the point to finish the formation is not limited.

For example, the point to start the formation of the scribe lines may be in the outer peripheral portion of the mother substrate 101 (for example, point P1), and the point to finish the formation may be in the outer peripheral portion of the mother substrate 101 (for example, point P22) (see Figure 9). For example, the point to start the formation of the scribe lines may be in the outer peripheral portion of the mother substrate 101 (for example, point P1), and the point to finish the formation may be on an outer side CD of the mother substrate 101 (for example, point P23). For example, the point to start the formation of the scribe lines may be on an outer side AD of the mother substrate 101 (for example, point P0), and the point to finish the formation may be in the outer peripheral portion of the mother substrate 101 (for example, point P22). For example, the point to start the formation of the scribe lines may be on an outer side AD of the mother substrate 101 (for example, point P0), and the point to finish the formation may be on an outer side CD of the mother substrate 101 (for example, point P23).

Furthermore, when the scribing head 165 is used, a response in an adjustment of the load transmitted to the scribing cutter 121 can be made fast. Thus, when the pressure of the scribing cutter 121 is moved from an inner side portion of a unit substrate or an outer side portion of a unit substrate to the outer peripheral portion of the mother substrate 101, the load to the scribing cutter 121 can be reduced. Further, when the pressure of the scribing cutter 121 is moved on the outer peripheral portion of the mother substrate 101, the load to the scribing cutter 121 can be lower than that while the pressure is moving on other portions.

Specifically, when the scribing cutter 121 is moved on dotted portions of the line to be scribed (straight line P1-P2, curved line R1, straight line P4-P5, curved line R2, curved line R3, curved line R4, straight line P10-P11, curved line R5, curved line R6, curved line R7, straight line P14-P15, curved line R8, curved line R9, curved line R10, straight line P20-P21, curved line R11, and straight line P12-P22 (see Figure 9 for above-mentioned lines), straight line P51-P67, curved line R21, straight line P53-F54, curved line R22, curved line R23, straight line P57-P58, curved line R24, curved line R25, curved line R26, straight line P61-P62, curved line R27, curved line R28, straight line P65-P66, curved line R29, and straight line P67-P68 (see Figure 11 for the above-mentioned lines)), the load to the scribing cutter 121 can be reduced.

In this way, when the scribing cutter 121 scribes the mother substrate 101, the pressure applied to the mother substrate 101 by the scribing cutter 121 can be reduced at any place. Thus, wearing of and damage to the scribing cutter 121 can be suppressed, and the scribing cutter 121 can be stably used for a long period of time.

### 2-3. Breaking step

Hereinafter, the details of the breaking step performed in step 803 (see Figure 8) will be described.

The breaking step is performed on the mother substrate 101 with the scribe lines formed thereon by the scribing step.

After the scribe lines are formed along the line to be scribed, steam of the temperature at which mother substrate 101 expands is sprayed to the scribe lines. Steam is sprayed from the nozzle portion 152d of the breaking device 152.

By spraying steam to the scribe lines, vertical cracks running from the scribe lines extend in the thickness direction of the mother substrate 101. The steam sprayed to the vertical cracks having openings in the order of micrometer penetrates into the vertical cracks in a capillary phenomenon. The penetrated liquid expands (volume expansion), and thus, the vertical cracks are extended toward the back surface of the mother substrate 101.

The steam may be sprayed to the surface of the mother substrate 101 by the breaking device 154 (see Figure 7).

Furthermore, the mother substrate 101 may be broken along the scribe lines formed on the mother substrate by applying a pressure to the mother substrate with the scribe lines have been formed thereon, from a surface opposite to the surface on which the scribe lines are formed.

Furthermore, the scribing head may include a laser oscillator for heating the scribing lines using a laser bean instead of steam in the scribing head. The scribing head 120 may include a laser oscillator for drying moisture.

An example of the embodiments of the present invention has been described above with reference to Figures 8 and 10.

For example, in the embodiment shown in Figures 8 and 10, steps 802 and steps 1001 through 1016 correspond to a step for "forming the scribe lines on the mother substrate". Step 803 corresponds to a step for "breaking the mother substrate along the scribe lines". Steps 1001 through 1016 corresponds to a step for "forming a first scribe line for cutting a first unit substrate out of the mother substrate and a second scribe line for cutting a second unit substrate out of the mother substrate by moving a pressure to the mother substrate without the pressure to the mother substrate being interrupted".

However, the mother substrate cutting method of the present invention is not limited to the embodiment shown in Figures 8 and 10. The present invention may include any process procedure as long as "forming the scribe lines on the mother substrate", "breaking the mother substrate along the scribe lines", and "forming a first scribe line for cutting a first unit substrate out of the mother substrate and a second scribe line for cutting a second unit substrate out of the mother substrate on the mother substrate by moving a pressure to the mother substrate without the pressure to the mother substrate being interrupted" are performed by the steps included in the mother substrate cutting method.

As described above, according to the mother substrate cutting method of the present invention, the scribe line in a single stroke can be formed. Herein, the "scribe line in a single stroke" refers to a sole scribe line formed for taking out a plurality of unit substrates out of the mother substrate. The scribe line in a single stroke is formed without the scribing cutter being lifted from the mother substrate from the start point of the scribe line in a single stroke to the end point while the pressure to the mother substrate is kept (maintained) from the start point of the scribe line in a single stroke to the end point.

According to the mother substrate cutting method of the present invention, the first scribe line and the second scribe line can be formed without the movement of the pressure to the mother substrate being suspended. Thus, the scribing process time for forming the scribe lines can be reduced. Furthermore, the scribe lines can be formed on the mother substrate since cracks do not reach the sides of the mother substrate during the scribing process, and thus, the mother substrate is less likely to be cut by a force generated by an external factor. As a result, it is possible to present the mother substrate from being divided into two or more portions during the scribe lines are formed.

The unit substrates may be, for example, glass substrates. However, the unit substrates are not limited to glass substrates. The unit substrates can be, for example, quartz substrates, sapphire substrates, semiconductor wafers, ceramic substrates, or solar cell substrates.

Further, in the scribing step according to an embodiment of the present invention, the scribing cutter (for example, a cutter wheel tip, a diamond point cutter, a cutter wheel, or any other scribe formation means) is abutted against the mother substrate 101, and then the scribe line is formed with the pressure to the mother substrate 101 being periodically varied by shaking the scribing cutter. When the scribe lines are formed with the pressure to the mother substrate 101 being periodically varied, vertical cracks extend deep inside the mother substrate. Thus, the mother substrate can effectively be cut by performing the breaking step.

In the embodiments of the present invention, one mother substrate 101 is cut. However, the number of the substrate to be cut is not limited to one. The present invention can be applied to the case where the bonded substrate formed by bonding a first substrate and a second substrate is cut. The bonded substrate can be cut into, for example, liquid display panels which is a type of flat display panel, organic EL panels, inorganic EL panels, transmissive projector substrates, reflective projector substrates, or the like.

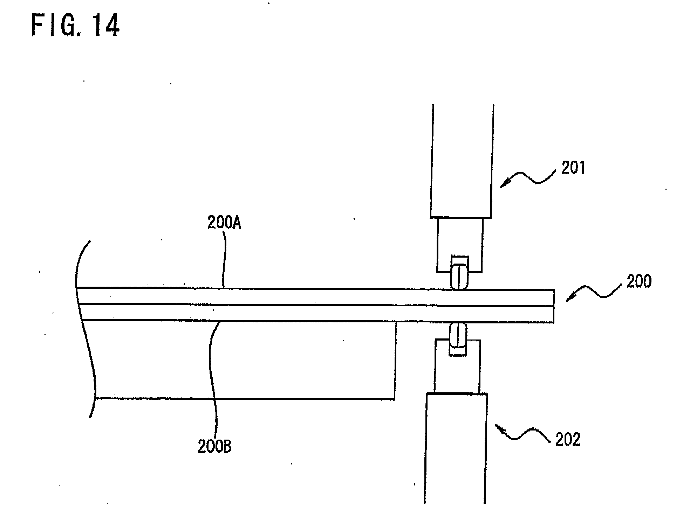

Figure 14 shows a part of a mother substrate cutting device which can cut a bonded substrate which is formed by bonding two mother substrates.

The bonded substrate 200 is formed by bonding a mother substrate 200A and a mother substrate 200B. The scribe lines are formed on the bonded substrate 200 by a scribing device 201 and a scribing device 202 from both principal surfaces (from the upper side and the lower side) of the bonded substrate 200.

When the scribing head 165 is used as the scribing device 201 and the scribing device 202, the response in the adjustment of the load transmitted to the scribing cutter 121 is fast. Thus, the bonded substrate 200 can be scribed so as to conform to undulations of the bonded substrate 200.

The scribing device and the breaking device may be one device. The scribing head (scribing device) used for forming the scribe lines in the scribing step may be used as the breaking device in the breaking step.

Hereinafter, another example of the mother substrate cutting method according to the present invention will be described. In the example, the scribing device used for forming the scribe lines in the scribing step may be used as the breaking device in the breaking step in the mother substrate cutting apparatus.

In this example, a main scribe line is formed on the mother substrate by moving the scribing device along the main line to be scribed, and a sub-scribe line is formed on the mother substrate by moving the scribing device along the sub-line to be scribed. The main line to be scribed is the line to be scribed along which the scribing device is moved, and the sub-line to be scribed is the line to be scribed along which the breaking device is moved. The main scribe line is a scribe line formed on the mother substrate by moving the scribing device along the main line to be scribed, and the sub-scribe line is a scribe line formed on the mother substrate by moving the breaking device along the sub-line to be scribed.

By forming the sub-scribe line with a predetermined space (for example, about 0.5 to 1 mm) being placed from the main scribe line, the mother substrate is broken along the main scribe line and a plurality of unit substrates are out out from the mother substrate.

By forming the sub-scribe line, a stress is applied to the surface of the mother substrate 101 in a direction orthogonal to the formation direction of the main scribe line and a horizontal direction, and a compressing force is applied to the vertical cracks running from the main scribe line. When the compressing force is applied to the vertical cracks running from the main scribe line, a reaction force is applied to bottoms of the vertical cracks in a direction to expand the widths of the vertical cracks. Thus, vertical cracks are extended in the thickness direction of the mother substrate 101 and then reach the back surface of the mother substrate. In this way, a plurality of unit substrates can be cut out of the mother substrate.

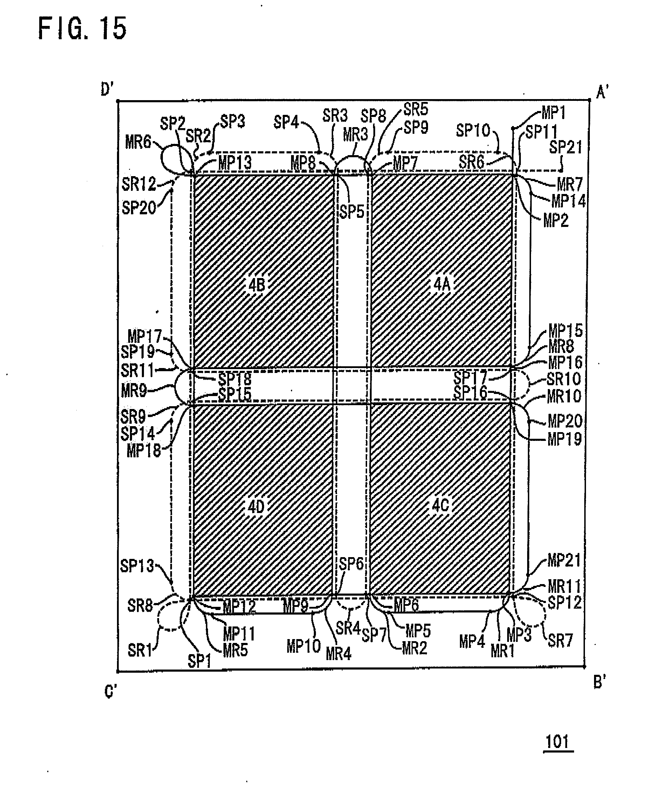

Figure 15 shows an example of the mother substrate 101 used in the scribing step and the breaking step according to an embodiment of the present invention. On the mother substrate 101, the main line to be scribed and the sub-line to be scribed are formed. By moving the scribing device along the main line to be scribed, the main scribe line is formed on the mother substrate. Then, by moving the scribing device along the sub-line to be scribed, the sub-scribe line is formed on the mother substrate.

The main line to be scribed includes a plurality of straight lines (straight line MP1-MP2, straight line MP2-MP3, straight line MP4-MP5, straight line MP6-MP7, straight line MP8-MP9, straight Line MP10-MP11, straight line MP12-MP13, straight line MP13-MP2, straight line MP14-MP15, straight line MP16-MP17, straight line MP18-MP19, straight line MP20-MP21, and straight line MP3-MP12) and a plurality of curved lines (curved lines MR1 through MR11).

The sub-line to be scribed includes a plurality of straight lines (straight line SP1-SP2, straight line SP3-SP4. straight line SP5-SP6, straight line SP7-SP8, straight line SP9-SP10, straight line SP11-SP12, straight line SP12-SP1, straight line SP13-SP14, straight line SP15-SP16, straight line SP17-SP18, straight line SP19-SP20, straight line SP2-SP11, and straight line SP11-SP21), and a plurality of curved lines (curved lines SR1 through SR12).

The main line to be scribed and the sub-line to be scribed are formed with a predetermined space (for example, about 0.5 to 1 mm) interposed therebetween. The straight line MP2-MP3 and the straight line SP11-SP12 are parallel. The same is also true of the straight line MP6-MP7 and the straight line SP7-SP8, the straight line MP8-MP9 and the straight line SP5-SP6, and the straight line MP12-MP13 and the straight line SP1-SP2. Further, the straight line MP13-MP2 and the straight line SP2-SP11, the straight line MP16-MP17 and the straight line SP17-SP18, the straight line MP18-MP19 and the straight line SP15-SP16, and the straight line MP3-MP12 and the straight line SP12-SP1 are respectively parallel to each other.

The mother substrate cutting apparatus 100 forms the main scribe line along the main line to be scribed and forms the sub-scribe line along the sub-line to be scribed on the mother substrate 101 to out unit substrates 4A, 4B, 4C, and 4D out of the mother substrate 101.

The unit substrate 4A is a portion of the mother substrate 101 defined by the straight line NP2-MP3, straight line MP6-MP7, straight line MP13-MP2, and straight line ME16-MP17. The unit substrate 4B is a portion of the mother substrate 101 defined by the straight line MP8-MP9, straight line MP12-MP13, straight line MP13-MP2, and straight line MP16-MP17. The unit substrate 4C is a portion of the mother substrate 101 defined by the straight line MP2-MP3, straight line MP6-MP7, straight line MP18-MP19, and straight line MP3-MP12. The unit substrate 4D is a portion of the mother substrate 101 defined by the straight line MP8-MP9, straight line MP12-MP13, straight line MP18-MP19, and straight line MP3-MP12. The unit substrates 4A, 4B, 4C, and 4D are located with appropriate spaces therebetween.

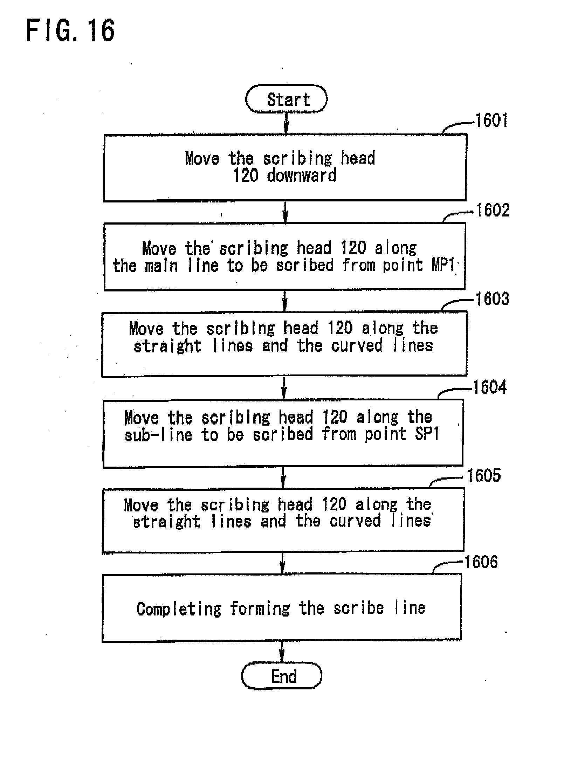

Figure 16 shows a scribing procedure performed by the scribing step and a breaking procedure performed by the breaking step according to an embodiment of the present invention.

Hereinafter, the scribing procedure and the breaking procedure will be described step by step with reference to Figures 15 and 16.

Step 1601: The scribing head moving means moves the scribing head 120 at the predetermined waiting position downward. When the scribing head 120 is moved downward by the scribing head moving means from the predetermined waiting position to the position at 0.1 mm to 0.2 mm from an upper surface of the mother substrate 101, the scribing cutter 121 presses the mother substrate 101 in a manner such that it can sufficiently conform to a surface roughness of the mother substrate 101 fixed on the table 131. A controller 144 issues an instruction to the third driver 147 to drive the scribing head driving linear motor 146. As the scribing head driving linear motor 146 being driven, the scribing head 120 moves along the guide bar 136.

Step 1602; Formation of the main scribe line is started from an outer peripheral portion of the mother substrate 101 (area surrounded by area A'-B'-C'-D' and area MP2-MP3-MP12-MP13). More specifically, the control section 140 presses the scribing cutter 121 to the mother substrate 101 and moves the scribing head 120 along the main line to be scribed from point MP1 (point in the outer peripheral portion of the mother substrate) to form the main scribe line.

Step 1603: The control section 140 presses the scribing cutter 121 to the mother substrate 101, and moves the seething head 120 along the straight line MP1-MP2, the straight line MP2-MP3, the curved line MR1, the straight line MP4-MP5, the curved line MR2, the straight line MP6-MP7, the curved line MR3, the straight line MP8-MP9, the curved line MR4, the straight line MP10-MP11, the curved line MR5, the straight line MP12-MP13, the curved line NR6, the straight line MP13-MP2, the curved line MR7, the straight line MP14-MP15, the curved line MR8, the straight line MP16-MP17, the curved line MR9, the straight line MP18-MP19, the curved line MR10, the straight line MP20-MP21 and the curved line MR11 in this order to form the main scribe line.

Step 1604: Formation of the sub-scribe line is started from an outer peripheral portion of the mother substrate 101 (area surrounded by area A'-B'-C'-D' and area MP2-MP3-MP12-MP13). More specifically, the control section 140 moves the scribing head 120 along the sub-line to be scribed from point SP1 (point in the outer peripheral portion of the mother substrate) to form the sub-scribe line.

Step 1605: The control section 140 moves the scribing head 120 along the curved line SR1, the straight line SP1-SP2, the curved line SR2, the straight line SP3-SP4, the curved line SR3, the straight line SP5-SP6, the curved line SR4, the straight line SP7-SP8, the curved line SR5, the straight line SP9-SP10, the curved line SR6, the straight line SP11-SP12, the curved line SR7, the straight line SP12-SP1, the curved line SR8, the straight line SP13-Sf14, the curved line SR9, the straight line SP15-SP16, the curved line SR10, the straight line SP17-SP18, the curved line SR11, the straight line SP19-SP20, the curved line SR12, the straight line SP2-SP11, and the straight line SP11-SP21 in this order to form the sub-scribe line.

Step 1606: The control section 140 finishes the formation of the sub-scribe line at point SP21.

The scribing head moving means moves the scribing head 120 to the predetermined waiting position to finish the breaking step.

In this way, the mother substrate can be broken by forming the sub-scribe line along the main scribe line as in steps 1604 through 1606. Thus, the scribing step and the breaking step can be performed by only forming the scribe lines.

In steps 1601 through 1606, the main scribe line and the sub-scribe line can be formed by moving the pressure to the mother substrate without the pressure to the mother substrate being interrupted. In this way, the main-scribe line and the sub-scribe line can be formed without the movement of the pressure to the mother substrate being suspended. Thus, the cutting process time for cutting the mother substrate can be reduced.

Further, in steps 1604 through 1606, the sub-scribe line along the main scribe line can be formed by moving the pressure to the mother substrate without the pressure to the mother substrate being interrupted. In this way, the sub-scribe line can be formed without the movement of the pressure to the mother substrate being suspended. Thus, the breaking process time can be reduced.

The present invention has been described above with reference to the preferable embodiments of the present invention. However, the present invention should not be construed as being limited to such embodiments. It should be recognized that the scope of the present invention is only construed by the claims. It should be recognized that those skilled in the art can implement the equivalent scope from the descriptions of the specific preferable embodiments, based on the descriptions of the present invention and common technical knowledge, It is also recognized that the patents, patent applications and documents referred herein are hereby incorporated by reference as if their entirety are described.

### INDUSTRIAL APPLICABILITY

According to the mother substrate cutting method, mother substrate scribing device, program and recording medium of the present invention, a first scribe line and a second scribe line can be formed without a movement of a pressure to a mother substrate being interrupted. Thus, a scribing process time for foaming the scribe lines can be reduced. Further, cracks do not reach sides of the mother substrate during the scribing process, and thus, the mother substrate is less likely to be cut by a force generated by an external factor. In this way, the scribe lines can be formed on the mother substrate. As a result, it is possible to prevent the mother substrate from being divided into two or more portions while the scribe lines are being formed.

## Claims

1. A mother substrate cutting method for cutting a plurality of unit substrates out of a mother substrate, comprising the steps of:
(a) forming scribe lines on the mother substrate by scribe forming means; and
(b) breaking the mother substrate along the scribe lines, wherein
the step (a) includes a step of forming scribe lines for cutting at least one unit substrate out of the mother substrate by moving the scribe forming means with respect to the mother substrate without a pressure to the mother substrate by the scribe forming means being interrupted.

2. A mother substrate cutting method according to claim 1, wherein:
the step (a) further includes a step of forming scribe lines for cutting a plurality of unit substrate out of the mother substrate by moving the scribe forming means with respect to the mother substrate without a pressure to the mother substrate by the scribe forming means being interrupted; and
n is an integer equal to or larger than 3.

3. A mother substrate cutting method according to claim 2, wherein the step (a) includes the steps of;
in cutting a first unit substrate and a second unit substrate adjacent to each other out of the mother substrate
(a-1) forming the scribe lines on the mother substrate by moving the scribe forming means with respect to the mother substrate along an outer side portion adjacent to an outer peripheral portion of the mother substrate in the first unit substrate and the second unit substrate;
(a-2)forming the scribe lines on the mother substrate by moving the scribe forming means with respect to the mother substrate along an inner side portion of side portions facing each other in the first unit substrate and the second unit substrate.

4. A mother substrate cutting method according to claim 3, wherein
the inner side portion of the second unit substrate opposes the inner side portion of the first unit substrate, and
the step (a-2) includes the steps of:
(a-2a) forming the scribe lines on the mother substrate by moving the scribe forming means with respect to the mother substrate along the inner side portion of the first unit substrate;
(a-2b) forming the scribe lines on the mother substrate by moving the scribe forming means with respect to the mother substrate on the outer peripheral portion of the mother substrate after the step (a-2a) is performed;
(a-2c) forming the scribe lines on the mother substrate by moving the scribe forming means with respect to the mother substrate along the inner side portion of the second unit substrate after the step (a-2b) is performed; and
(a-3d) forming the scribe lines on the mother substrate by moving the scribe forming means with respect to the mother substrate on the outer peripheral portion of the mother substrate after the step (a-3c) is performed.

5. A mother substrate cutting method according to claim 1, wherein the step (a) further includes a step for reducing the pressure to the mother substrate by the scribe forming means.

6. A mother substrate cutting method according to claim 1, wherein the step (a) includes the steps of:
forming the scribe lines by the scribe forming means along a first direction; and
moving the scribe forming means with respect to the mother substrate such that the scribe lines formed along the first direction and the scribe lines to be formed along a second direction which is different from the first direction are linked with curved lines.

7. A mother substrate cutting method according to claim 1, wherein a plurality of unit substrates are one of glass substrates, quartz substrates, sapphire substrates, semiconductor wafers, ceramic substrates, solar cell substrates, liquid display panels, organic EL panels, inorganic EL panels, transmissive projector substrates, and reflective projector substrates.

8. A mother substrate cutting method according to claim 1, wherein the step (b) includes a step of breaking the mother substrate by forming sub-scribe lines along the scribe lines.

9. A mother substrate cutting method according to claim 8, further comprising a step of forming the scribe lines and the sub-scribe lines by moving the scribe forming means with respect to the mother substrate without a pressure to the mother substrate by the scribe forming means being interrupted.

10. A mother substrate cutting method according to claim 8, wherein the step (b) includes a step of forming a first sub-scribe line along the first scribe line and a second sub-scribe line along the second scribe line by moving the pressure to the mother substrate without a pressure to the mother substrate by the scribe forming means being interrupted.

11. A mother substrate cutting method according to claim 1, at least one of both end portions of the scribe line is a curved line.

12. A mother substrate scribing device comprising:
scribe line forming means for forming scribe lines on a mother substrate; and
control means for controlling the scribe line forming means, wherein
the control means control the scribe line forming means so as to move the scribe forming means with respect to the mother substrate without a pressure to the mother substrate by the scribe forming means being interrupted, and to form a first scribe line for cutting a first unit substrate out of the mother substrate and a second scribe line for cutting a second unit substrate out of the mother substrate on the mother substrate.

13. A mother substrate scribing device according to claim 12. wherein the scribe line forming means includes:
a scribing member for forming scribes on a surface of the mother substrate; and
adjustment means for adjusting a pressure of the scribing member with respect to the surface of the mother substrate, and
the control number controls the adjustment means.

14. A mother substrate scribing device according to claim 13, wherein the scribing member is a cutter wheel tip.

15. A program for having a computer to perform each of the steps in the mother substrate cutting method according to claim 1.

16. A computer readable recording medium on which a program according to claim 15 is recorded.
